# EUROPÄISCHE PATENTSCHRIFT

(11) **EP 1 339 298 B1**
(45) Veröffentlichungstag und Bekanntmachung des Hinweises auf die Patenterteilung: **22.09.2004**
(21) Anmeldenummer: 01995588.9
(22) Anmeldetag: 07.12.2001
(51) Int. Cl.: A45C 3/02

(54) **TASCHE**
BAG
SACOCHE

(30) Priorität: 07.12.2000 DE 10060924
(43) Veröffentlichungstag der Anmeldung: 03.09.2003
(73) Patentinhaber: Infineon Technologies AG, 81669 München (DE)
(72) Erfinder: JUNG, Stefan, 80469 München (DE); LAUTERBACH, Christl, 85635 Höhenkirchen-Siegertsbrunn (DE)
(74) Vertreter: Dokter, Eric-Michael
(86) Internationale Anmeldenummer: PCT/DE2001/004597
(87) Internationale Veröffentlichungsnummer: WO 2002/045538

(56) Entgegenhaltungen:
- DE-A- 19 640 645
- US-A- 5 533 097
- US-A- 5 872 557
- US-A- 6 134 105

## Beschreibung

Es ist bekannt, in einem Kleidungsstück, beispielsweise einer Jacke oder einem Pullover, elektrische Geräte zur Datenverarbeitung zu integrieren und miteinander über eine Kommunikationsschnittstelle zu vernetzen.

Die Integration von miteinander vernetzten elektrischen Geräten zur Datenverarbeitung in ein Kleidungsstück wird auch als "Wearable Electronics" bezeichnet.

Durch ein solches Kleidungsstück soll ermöglicht werden, dass jederzeit und überall die Kommunikation sowie die Bereitstellung von Information mittels der elektrischen Geräte in dem Kleidungsstück sowie deren Interaktion miteinander und mit anderen externen Datennetzen (externen Kommunikationsnetzen) gewährleistet ist.

Ein solches Kleidungsstück weist insbesondere die im Weiteren näher erläuterten Nachteile auf:
- Da die in das Kleidungsstück integrierte mobile Elektronik stets verfügbar sein soll, muss in jedes Kleidungsstück diese Elektronik eingebaut, d.h. integriert sein. Dadurch entstehen hohe Kosten, da die einzelnen elektrischen Geräte mehrfach vorhanden sein müssen (jeweils für jedes vorhandene Kleidungsstück, das diese Funktionalität aufweisen soll). Aus diesen Kostengründen ist ein solches Kleidungsstück nur für eine Spezialanwendung sinnvoll und bei den derzeitig sehr hohen Preisen der einzelnen elektrischen Geräten nicht für den Massenmarkt geeignet. Ein Austausch der üblicherweise in das Kleidungsstück eingenähten oder auf andere Weise integrierten elektrischen Geräte beim Wechsel des Kleidungsstücks ist umständlich und reduziert den Bedienkomfort und Tragekomfort für einen Benutzer erheblich.
- Eingabeschnittstellen und Ausgabeschnittstellen für die Eingabe bzw. Ausgabe von Daten sind in einem Kleidungsstück nur sehr umständlich anzubringen. Für den Fall, dass das Kleidungsstück eine Jacke ist, ist es ferner fraglich, an welcher Stelle der Jacke beispielsweise eine (ergonomische) Tastatur bzw. ein Touchpad oder ein Display sinnvollerweise angebracht werden kann. Auch eine Steuerung der elektrischen Geräte in dem Kleidungsstück mittels Sprache ist nicht in jeder Situation während des Benutzens des Kleidungsstücks möglich oder angebracht.
- Beim Einbau von drahtlosen Kommunikationsgeräten in ein Kleidungsstück besteht ferner der Nachteil, dass eine hochfrequente elektrische Signale aussendende Antenne immer in der Nähe des Körpers angebracht werden muss. Dies führt zu möglichen gesundheitlichen Schäden bei dem Träger des Kleidungsstücks und kann somit potentielle Käufer von dem Kauf eines solchen Kleidungsstücks abschrecken.
- Ferner ist es nicht bei allen Umgebungsbedingungen bzw. in jeder Situation (beispielsweise bei sehr hohen Temperaturen) zweckmäßig oder auch nur möglich, ein solches Kleidungsstück zu tragen, welches ausreichend Platz für die Integration der benötigten elektrischen Geräte bietet.

Von der Firma Reima™ ist, wie in [1] beschrieben, ein Schutzanzug für arktische Umgebungsbedingungen bekannt.

Der aus [1] bekannte Schutzanzug weist folgende in den Schutzanzug integrierte elektrische Geräte auf:
- Eine GPS-Einheit (GPS: Global Positioning System),
- ein Mobilfunktelefon,
- eine Funksendeeinheit zum automatischen Senden von SOS-Nachrichten bei Bewusstlosigkeit oder starken Schmerzen des Schutzanzugträgers,
- einen Elektrokardiographen,
- mehrere Beschleunigungssensoren zum Ermitteln eines möglichen Unfalls,
- eine Heizung,
- eine Computereinheit mit einer Anzeigeeinheit (Display) und einer einzigen Bedientaste.

Der in [1] beschriebene Schutzanzug weist die oben beschriebenen allgemeinen Nachteile eines mit elektrischen Geräten versehenen Kleidungsstücks auf.

Weiterhin ist es aus [2] bekannt, elektrische Leitungen in das Gewebe eines Kleidungsstücks zu integrieren, beispielsweise einzuweben.

Weiterhin ist in [3] eine Stofftastatur, d.h. anschaulich ein Touchpad, welches mehrere Schichten leitfähigen Gewebes aufweist, beschrieben.

In [4] ist ferner eine Übersicht über unterschiedliche Anzeigeeinheiten, d.h. beispielsweise über Flüssigkristallanzeigen, OLED-Displays, sogenanntes elektronisches Papier sowie elektronische Tinte zu finden.

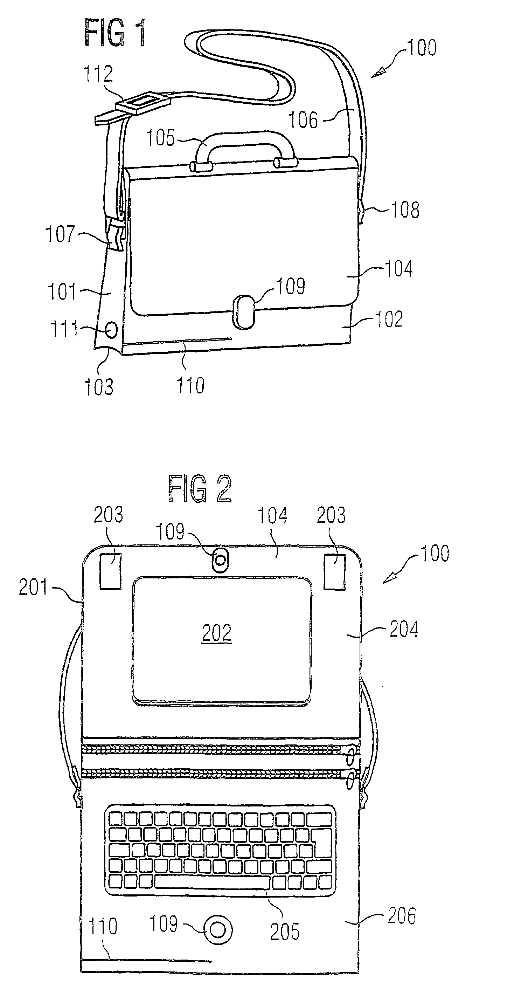

Ferner ist aus [5] ein Kommunikationsendgerät bekannt, das zum Senden und Empfangen von Kommunikationsinformationen vorgesehen ist und das in einen Rundfunk- und/oder Rundfunkempfänger integriert ist. Dieses Endgerät weist eine Vielzahl von Modulen auf, die in ihrer Funktionalität in Fig.1 von [5] als Blockdiagramm symbolisch dargestellt sind.

Des weiteren ist aus [6] und US 6 134 105 ein transportables Datenverarbeitungssystem und eine kofferartige Aktentasche hierzu bekannt. Das Datenverarbeitungssystem ist gemäß [6] aus mehreren modularen Komponenten zusammengesetzt, die in einem oder mehreren Fächer der kofferartigen Aktentasche herausnehmbar und austauschbar untergebracht sind. Die Kopplung der einzelnen Komponenten erfolgt mittels externer Kabel.

Darüber hinaus wird in [7] ein Aktenkoffer beschrieben, der mit einer elektrischen Diebstahlssicherung ausgestattet ist, bei dem bei Fremdberührung Alarm ausgelöst wird.

Aus [8] ist ferner noch eine Vorrichtung zum Sichtbar- und Hörbarmachen von Daten bzw. Binärinformationen aus einem Datenträger oder z.B. einer CD-ROM auf einem Bildschirm bekannt.

Der Erfindung liegt das Problem zugrunde, eine Bedienungsumgebung zum Vernetzen mehrerer elektrischer Geräte zur persönlichen mobilen Kommunikations- und Informationsversorgung anzugeben, die zumindest einen Teil der oben beschriebenen Nachteile der in einem Kleidungsstück integrierten elektrischen Geräte reduziert.

Das Problem wird durch die Tasche mit den Merkmalen gemäß dem unabhängigen Patentanspruch gelöst.

Eine Tasche weist zumindest eine in diese integrierte Kommunikationsschnittstelle auf, mittels der eine Mehrzahl von in der Tasche enthaltenen elektrischen Geräte miteinander elektrisch gekoppelt werden können derart, dass zwischen den elektrischen Geräten, vorzugsweise digitale, Daten ausgetauscht werden können.

Die Tasche stellt somit anschaulich ein portables Büro dar mit einer in die Tasche integrierten Kommunikationsschnittstelle sowie einem Kommunikationsnetzwerk, das in der Tasche ausgebildet ist.

Das Kommunikationsnetzwerk ist gemäß unterschiedlichen Ausführungsbeispielen beispielsweise mittels in die Tasche integrierter elektrischer Leitungen, die als Busleitungen des Kommunikationsnetzes zur Übertragung von Daten zwischen den elektrischen Geräten dienen oder auch mittels in der Tasche enthaltenen Funksender bzw. Funkempfänger zum Senden elektrischer Signale bzw. zum Empfangen elektrischer Signale von einem ersten sich in der Tasche befindenden elektrischen Gerät zu einem zweiten sich in der Tasche befindenden elektrischen Gerät, realisiert.

Der Datenaustausch zwischen den elektrischen Geräten erfolgt vorzugsweise bidirektional.

Der Begriff "integriert" ist im Rahmen dieser Beschreibung dahingehend zu verstehen, dass die entsprechenden integrierten Elemente Teil der Tasche sind, beispielsweise sind die jeweiligen Elemente in das Textilmaterial der Tasche eingenähtes Material oder sogar anderweitig, beispielsweise für elektrische Leitungen wie in [2] beschrieben unmittelbar in das Textilmaterial gewobenes elektrisch leitfähiges Material.

In die Tasche kann ein Energieversorgungsanschluss integriert sein, mit dem eine in der Tasche enthaltene Energieversorgungseinheit, beispielsweise ein Akkumulator oder eine Batterie, koppelbar ist zur Energieversorgung der in der Tasche enthaltenen und mit der Kommunikationsschnittstelle und dem Energieversorgungsanschluss gekoppelten elektrischen Geräten.

Sind in der Tasche elektrische Leitungen integriert, so sind diese mit der Kommunikationsschnittstelle oder mit einer Mehrzahl von in der Tasche integrierten Kommunikationsschnittstellen gekoppelt und bilden mit dieser ein Kommunikationsnetz.

Zum Datenaustausch zwischen den elektrischen Geräten über das Kommunikationsnetz kann ein beliebiges Kommunikationsprotokoll verwendet werden.

Alternativ kann das Kommunikationsnetz auch als ein Funknetz ausgestaltet sein, in welchem Fall ein Funksender in der Tasche enthalten ist zum Senden elektrischer Signale sowie ein Funkempfänger zum Empfangen der von dem Funksender gesendeten elektrischen Signale.

Der Funksender und/oder der Funkempfänger sind mit der Kommunikationsschnittstelle gekoppelt.

Auch zur Datenübertragung über ein auf die oben beschriebene Weise gebildetes Funk-Kommunikationsnetz kann ein beliebiges Übertragungsprotokoll, beispielsweise ein Mobilfunkprotokoll oder auch ein Protokoll gemäß "Bluetooth" eingesetzt werden.

Zum Erhöhen der Datensicherheit und der Diebstahlsicherheit einer solchen Tasche kann der Zugang der Tasche mittels einer zusätzlich in der Tasche integrierten Authentifikationseinheit zum Authentifizieren eines Benutzers der Tasche kontrolliert werden.

Die Authentifikationseinheit kann beispielsweise ein in ein Schloss der Tasche integrierter Fingerabdruck-Sensor sein.

Alternativ kann eine Einheit zur Sprecherverifikation als Authentifikationseinheit in der Tasche integriert sein.

Gemäß einer weiteren Ausgestaltung der Erfindung ist es vorgesehen, dass ein Benutzer der Tasche ein Funkgerät, beispielsweise einen passiven Transponderchip zur Authentifikation bei sich tragen muss, welcher Transponderchip beispielsweise in einer Armbanduhr integriert sein kann, und dass sich das Schloss der Tasche, allgemein die Tasche nur dann öffnet bzw. nur dann die Benutzung der elektronischen Geräte in der Tasche erlaubt, wenn der Benutzer, d.h. der Besitzer des Funkgeräts und damit das Funkgerät selbst sich in der Nähe der Tasche befindet, so dass eine entsprechende Funkverbindung zwischen dem Transponderchip und der Tasche gebildet wird. Befindet sich das Funkgerät außerhalb eines vorgegebenen Bereichs um die Tasche herum, so sind die elektrischen Geräte in der Tasche nicht aktivierbar und somit nicht funktionstüchtig.

Gemäß dieser Ausgestaltung kann es ferner vorgesehen sein, dass eine Alarmierungseinheit vorgesehen ist, die ein Alarmsignal ausgibt, wenn das Funkgerät sich außerhalb der vorgegebenen Reichweite der Authentifikationseinheit befindet. Auf diese Weise wird es möglich, dem Benutzer der Tasche den Diebstahl der Tasche schon zu einem sehr frühen Zeitpunkt zu melden.

Wie im Weiteren noch näher erläutert wird, können in der Tasche folgende elektrische Geräte enthalten sein, die mit der oder den Kommunikationsschnittstellen und darüber miteinander gekoppelt sind:
- ein Mobilfunktelefon,
- eine GPS-Einheit,
- ein Datenspeicher,
- ein Handheld-Computer,
- ein Organizer,
- ein Computer,
- eine Spielekonsole,
- eine Datenanzeigeeinheit,
- ein Mikrofon,
- ein Lautsprecher,
- eine Spracherkennungseinheit, und/oder
- eine Kamera,
- etc.

Ferner kann in die Tasche eine Tastatur integriert sein, vorzugsweise eine Stofftastatur, wie sie beispielsweise in [3] beschrieben ist.

Die Tastatur kann ferner als eine Folientastatur ausgestaltet sein.

Die einzelnen Tastenelemente der Tastatur können kapazitive Sensoren aufweisen, mittels derer ein Ausüben eines Drucks auf ein Tastenelement erfasst werden kann, was schließlich als das Betätigen einer Taste interpretiert wird.

Unter einer Tasche ist beispielsweise eine der folgenden Taschenarten zu verstehen:
- eine Aktentasche,
- eine Schultasche,
- ein Rucksack,
- ein Koffer, oder
- eine Handtasche.

Anschaulich kann die Erfindung in einer zu einem tragbaren Kommunikationszentrum erweiterten Tasche gesehen werden, wobei das tragbare Kommunikationszentrum mittels der Integration einer modularen Informationstechnik-Elektronik realisiert wird.

Die Tasche wirkt somit anschaulich als ein Träger für ein Kommunikationsnetzwerk zum Verbinden der einzelnen in der Tasche enthaltenen Module, d.h. der jeweiligen elektrischen Geräte, sowie optional für eine gemeinsame Stromversorgung und für weitere Benutzerschnittstellen wie beispielsweise einer Tastatur oder einer Anzeigeeinheit.

Durch die Erfindung ergeben sich insbesondere folgende Vorteile:
- Die elektrischen Geräte sind ständig verfügbar.
- Ferner bietet die Oberfläche einer Tasche verglichen mit einem Kleidungsstück mehr Möglichkeiten, eine flexible Tastatur oder eine Anzeigeeinheit zu integrieren.

Die üblichen Bedienelemente eines Notebook-Computers, d.h. eine übliche Anzeigeeinheit bzw. eine Tastatur können in dem Deckel bzw. auf der Vorderseite einer Tasche eingearbeitet sein.

Durch diese Ausgestaltung der Erfindung wird eine weitere Vereinfachung und eine kompaktere Gestaltung der Tasche und somit auch eine kostengünstigere Herstellung und einfachere Bedienbarkeit erreicht.

Die Anzeigeeinheit kann als elektronisches Papier, als eine Flüssigkristallanzeige oder auch als eine Anzeigeeinheit mit OLEDs (organische Leuchtdioden), wie sie in beispielsweise in [4] beschrieben sind, ausgestaltet sein.

Ein weiterer Vorteil der Erfindung ist darin zu sehen, dass eine Tasche üblicherweise in einigem Abstand zum Körper getragen wird, weshalb die Abstrahlung von hochfrequenten elektrischen Signalen über eine Antenne, die in der Tasche integriert ist, üblicherweise unbedenklicher ist, verglichen damit, dass das elektrische Hochfrequenzsignal direkt von einer am Körper getragenen Antenne ausgestrahlt wird. Die dem Körper üblicherweise zugewandte Seite der Tasche kann zusätzlich eine Abschirmung gegen die elektromagnetische Strahlung besitzen.

Allgemein ist anzumerken, dass die Tasche universeller und flexibler einsetzbar ist als ein Kleidungsstück, in dem die elektrischen Geräte integriert sind.

Weiterhin ist es durch die Erfindung auf einfachere Weise möglich, die elektrischen Geräte und die in diesen gespeicherten Informationen und Daten vor Diebstahl zu schützen, beispielsweise mittels der gemäß einer Ausgestaltung der Erfindung vorgesehenen zusätzlichen Authentifikationseinheit.

Zusammenfassend wird somit eine Bedienungsumgebung geschaffen, durch die eine hohe Datensicherheit und ein hoher Diebstahlschutz, ein hoher Bedienkomfort und hoher Tragekomfort sowie eine universelle Einsetzbarkeit und eine hohe und ständige Verfügbarkeit der gewünschten Informationsdienste erreicht wird.

Ein Ausführungsbeispiel der Erfindung ist in den Figuren dargestellt und wird im Weiteren näher erläutert.

Es zeigen
- Figur 1: eine Skizze einer Tasche gemäß einem Ausführungsbeispiel der Erfindung;
- Figur 2: eine Skizze der Tasche aus Figur 1 in aufgeklapptem Zustand; und
- Figur 3: eine Seitenansicht der Tasche aus Figur 1 in aufgeklapptem Zustand.

In den Figuren sind gleiche Elemente mit gleichen Bezugszeichen versehen.

**Fig.1** zeigt eine Tasche 100 mit zwei Seitenteilen 101, einem Vorderseiten-Teil 102, einem Bodenelement 103 sowie einem aufklappbaren Deckelelement 104 und einem auf dem Rücken des Deckelelements 104 angebrachten Tragegriff 105.

Ferner ist ein verstellbarer Schulterriemen 106 an zwei Befestigungselementen 107, 108 an den Seitenteilen 101 der Tasche 100 befestigt.

An dem Deckelelement 104 ist ferner ein Schloss 109 angebracht, welches in Eingriff mit einem zweiten Schlosselement, welches auf dem Vorderseiten-Teil 102 der Tasche 100 aufgebracht ist, gebracht werden kann und somit die Tasche 100 verschließen kann.

Das elektronische Schloss 109 weist gemäß diesem Ausführungsbeispiel einen Fingerabdrucksensor auf, der nur bei Erfassen eines Fingerabdrucks eines vorgegebenen Benutzers das Schloss 109 öffnet und die im Weiteren beschriebenen elektrischen Geräte, die in der Tasche 100 enthalten sind, aktiviert.

In den Bodenbereich 103 ist eine Antenne 110 in die Tasche 100 integriert.

Weiterhin ist ein Netzanschluss 111, d.h. ein Steckverbinderteil zum Anschließen eines Netzsteckers in ein Seitenteil 101 der Tasche 100 integriert.

Ein Headset-Anschluss 112 ist an dem verstellbaren Schulterriemen 106 angebracht und über eine in den Schulterriemen 106 eingebrachte elektrische Leitung (nicht dargestellt) mit einer Kommunikationsschnittstelle (nicht dargestellt), die in der Tasche 100 integriert ist, gekoppelt.

Anstelle des Netzanschlusses 111 zum Anschließen einer externen Stromversorgung kann eine Batterie oder ein Akkumulator in einem Innenfach der Tasche 100 selbst enthalten sein und über eine entsprechende elektrische Leitung mit den jeweiligen elektrischen Geräten zu deren Stromversorgung gekoppelt sein.

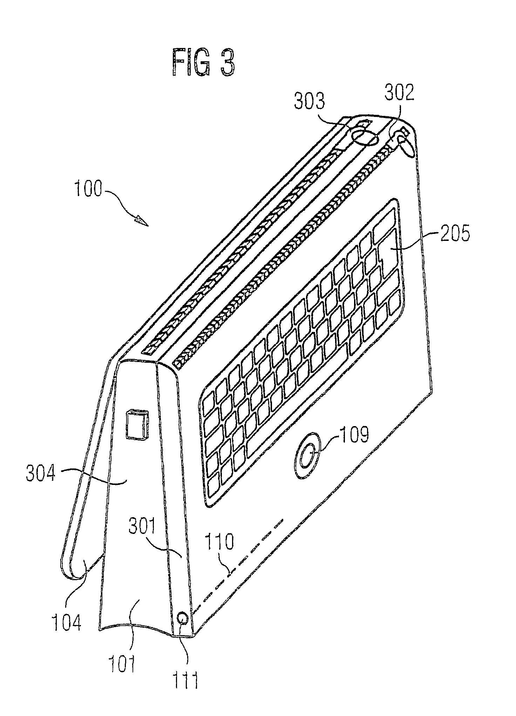

In der Innenseite 201 des Deckelelements 104 ist gemäß diesem Ausführungsbeispiel eine Anzeigeeinheit 202, die als Touchscreen ausgebildet ist, integriert. Die Anzeigeeinheit 202 ist im Wesentlichen in der Mitte der Innenseite 201 des Deckelelements 104 der Tasche 100 eingebracht (vgl. **Fig.2**).

Zwei Lautsprecher 203 sind in einem Randbereich 204 der Innenseite des Deckelelements 104 eingebracht.

Auf einer Außenseite eines ersten Fachs 301, in dem elektrisch leitende Verbindungen integriert sind, ist eine Tastatur 205 aufgebracht.

In dem ersten Fach 301 sind gemäß diesem Ausführungsbeispiel Aufnahmefächer (nicht dargestellt) zur Aufnahme elektrischer Geräte, beispielsweise einem Mobilfunktelefon oder einem Handheld-Computer mit entsprechenden Steckverbinderteilen, vorgesehen. Ferner ist jedes Aufnahmefach mit einer entsprechenden Kommunikationsschnittstelle versehen zum elektrischen Koppeln des jeweiligen in dem Aufnahmefach aufgenommenen elektrischen Geräts mit den elektrischen Leitungen, d.h. dem Kommunikationsnetz.

Die Tastatur 205 ist auf der Oberseite 206 des ersten Fachs 301 aufgebracht, wobei das Deckelelement 104 und die Oberseite des ersten Fachs 301 zusammenklappbar ausgestaltet sind und mittels des Schlosses 109 verschließbar sind, so dass das Deckelelement 104 die gesamte Tastatur 205 in geschlossenem Zustand der Tasche 100 abdeckt.

Auf diese Weise dient das Deckelelement 104 als Schutz für die Tastatur 205.

Die Tastatur 205 ist gemäß diesem Ausführungsbeispiel als Folientastatur ausgestaltet.

Gemäß einer alternativen Ausgestaltung kann die Tastatur ferner als eine Stofftastatur, wie beispielsweise in [3] beschrieben, ausgestaltet sein.

Weiterhin sind in der Tasche 100 ein erster Reißverschluss 302 sowie ein zweiter Reißverschluss 303 vorgesehen.

Mittels des ersten Reißverschlusses 302 wird das erste Fach 301 verschlossen bzw. geöffnet.

In dem Innenraum des ersten Fachs 301 sind mehrere Fächer (nicht dargestellt) vorgesehen, in die jeweils elektrische Geräte, gemäß diesem Ausführungsbeispiel ein Mobilfunktelefon, ein Handheld-Computer sowie ein MP3-Abspielgerät eingesteckt werden können.

In dem Bodenelement 103 der Tasche 100 sind ferner mehrere Kommunikationsschnittstellen integriert zum Ankuppeln und Ankoppeln der jeweiligen elektrischen Geräte an das in den Seitenteilen 101 und dem Rückseiten-Teil der Tasche 100 vorgesehen Kommunikationsnetz.

Die Kommunikationsschnittstellen können
- sowohl als feste Steckverbinderteile, beispielsweise als parallele oder serielle Schnittstelle, ausgestaltet sein, oder
- als eine Funkschnittstelle, beispielsweise als eine Infrarot-Schnittstelle, oder
- als ein an einem Kabel in das jeweilige Aufnahmefach hineinragende Steckverbinder-Teil.

In Fig.3 ist ein zweites Fach 304 dargestellt zur Aufnahme von Akten oder anderen Dokumenten, allgemein für weitere, nicht elektronische Utensilien.

Zum Öffnen und Verschließen des zweiten Fachs 304 ist der zweite Reißverschluss 303 vorgesehen.

In der Tasche 100 ist eine zentrale Prozessoreinheit vorgesehen zur Steuerung der Kommunikation der elektrischen Geräte über die Kommunikationsschnittstellen sowie die elektrischen Leitungen, d.h. das Kommunikationsnetz.

Mittels der zentralen Prozessoreinheit kann ferner die jeweilige Art des in einem Aufnahmefach eingesteckten elektrischen Geräts ermittelt werden, beispielsweise unter Verwendung eines vorgegebenen Identifizierungsprotokolls.

Als Technologie für eine solche Identifikation wird gemäß einer Ausgestaltung der Erfindung die sogenannte Bluetooth-Technologie eingesetzt.

In diesem Fall ist als Kommunikationsschnittstelle eine Infrarot-Schnittstelle zur Kommunikation der Prozessoreinheit in der Tasche 100 mit dem jeweiligen elektrischen Gerät, das in ein Aufnahmefach der Tasche 100 gesteckt ist, vorgesehen.

Alternativ können die jeweiligen elektrischen Geräte jeweils mit einem Transponderchip zu deren Identifikation ausgestattet sein.

Gemäß einer alternativen Ausführungsform ist es vorgesehen, dass in der Tasche 100 eine drahtlose Schnittstelle integriert ist zur Synchronisierung der elektrischen Geräte in der Tasche 100 mit einer externen Vorrichtung, beispielsweise mit einem Personal-Computer zur Übertragung von Daten eines elektrischen Geräts aus der Tasche 100 zu dem Personal-Computer oder auch zur Übertragung von Daten, beispielsweise zum Aufbau einer Kommunikationsverbindung zu einem weiteren, externen Kommunikationsendgerät.

In diesem Dokument sind folgende Veröffentlichungen zitiert:
[1] Erhältlich im Internet am 4. Dezember 2000 unter der URL-Adresse:
   http://www.reima.fi;
[2] Erhältlich im Internet am 4. Dezember 2000 unter der URL-Adresse:
   http://www.sensatex.com/technology.htm;
[3] Erhältlich im Internet am 4. Dezember 2000 unter der URL-Adresse:
   http://www.elektex.com;
[4] G.P. Crawford, A bright new page in portable displays, IEEE SPECTRUM, S. 40 - 46, Oktober 2000.
[5] DE 199 19 362
[6] DE 44 00 853
[7] DE 195 37 857
[8] DE 197 01 286

### Bezugszeichenliste

- 100: Tasche
- 101: Seitenteil
- 102: Vorderseiten-Teil
- 103: Bodenelement
- 104: Deckelelement
- 105: Tragegriff
- 106: Schulterriemen
- 107: Befestigungselement
- 108: Befestigungselement
- 109: Schloss
- 110: Antenne
- 111: Netzanschluss
- 112: Headset-Anschluss

- 201: Innenseite Deckelelement
- 202: Anzeigeeinheit
- 203: Lautsprecher
- 204: Randbereich Innenseite Deckelteil
- 205: Tastatur
- 206: Oberfläche erstes Fach

- 301: Erstes Fach
- 302: Erster Reißverschluss
- 303: Zweiter Reißverschluss
- 304: Zweites Fach

## Patentansprüche

1. Tasche
mit mehreren in die Tasche integrierten Kommunikationsschnittstellen, mit einem in einer Taschenwand ausgebildeten Kommunikationsnetzwerk, mit dem die Kommunikationsschnittstellen miteinander gekoppelt sind, so dass mittels der Kommunikationsschnittstellen und des Kommunikationsnetzwerks eine Mehrzahl von in der Tasche enthaltenen elektrischen Geräte miteinander elektrisch gekoppelt werden können, so dass zwischen den elektrischen Geräten Daten ausgetauscht werden können.

2. Tasche nach Anspruch 1,
mit einem in die Tasche integrierten Energieversorgungsanschluss, mit dem eine in der Tasche enthaltene Energieversorgungseinheit koppelbar ist zur Energieversorgung der in der Tasche enthaltenen elektrischen Geräte.

3. Tasche nach Anspruch 1 oder 2,
eingerichtet aus Textilmaterial.

4. Tasche nach Anspruch 3,
bei der das Kommunikationsnetzwerk in das Textilmaterial eingenäht ist.

5. Tasche nach einem der Ansprüche 1 bis 4,
bei der das Kommunikationsnetzwerk in die Tasche integrierte elektrische Leitungen aufweist, die mit der Kommunikationsschnittstelle gekoppelt sind zum Datenaustausch zwischen den elektrischen Geräten.

6. Tasche nach einem der Ansprüche 1 bis 5,
• mit einem Funksender zum Senden elektrischer Signale, und
• mit einem Funkempfänger zum Empfangen elektrischer Signale,
• wobei der Funksender und/oder der Funkempfänger mit der Kommunikationsschnittstelle gekoppelt sind.

7. Tasche nach einem der Ansprüche 1 bis 6,
mit einer Authentifikationseinheit zum Authentifizieren eines Benutzers der Tasche.

8. Tasche nach Anspruch 7,
bei der die Authentifikationseinheit
• eine Sprechererkennungseinheit, und/oder
• einen Fingerabdrucksensor,
aufweist.

9. Tasche nach Anspruch 7 oder 8,
bei der die Authentifikationseinheit in einem Schloss der Tasche enthalten ist.

10. Tasche nach einem der Ansprüche 1 bis 9,
bei der zumindest ein Teil der elektrischen Geräte als eines der folgenden, mit Kommunikationsmitteln versehenen, elektrischen Geräte ausgestaltet ist:
• ein Mobilfunktelefon,
• eine GPS-Einheit,
• ein Datenspeicher,
• ein Handheld-Computer,
• ein Computer,
• eine Spielekonsole,
• eine Datenanzeigeeinheit,
• ein Mikrofon,
• ein Lautsprecher,
• eine Spracherkennungseinheit, und/oder
• eine Kamera.

11. Tasche nach einem der Ansprüche 1 bis 10,
mit einer in die Tasche integrierten Tastatur.

12. Tasche nach Anspruch 11,
bei der die Tastatur
• als Folientastatur ausgestaltet ist, und/oder
• kapazitive Sensoren als Tastenelemente der Tastatur aufweist.

13. Tasche nach einem der Ansprüche 1 bis 12, eingerichtet als eine der folgenden Taschenarten:
• eine Aktentasche,
• eine Schultasche,
• ein Rucksack,
• ein Koffer, oder
• eine Handtasche.

## Claims

1. A bag comprising:
a plurality of communications interfaces being integrated into the bag;
a communications network formed in a bag wall with which the communication interfaces are connected to each other so that by means of the communication interfaces and the communications network a multiplicity of electrical devices contained in the bag can be electrically connected to each other to allow data exchange between the electrical devices.

2. The bag as claimed in claim 1, further
comprising a power supply terminal which is integrated into the bag and to which a power supply unit which is contained in the bag can be connected in order to supply power to the electrical devices contained in the bag.

3. The bag as claimed in claim 1 or 2, made of textile material.

4. The bag as claimed in claim 3, in which the communications network is sewn into the textile material.

5. The bag as claimed in one of claims 1 to 4, in which
the communications network has electrical lines which are integrated into the bag and which are connected to the communications interface for exchanging data between the electrical devices.

6. The bag as claimed in one of claims 1 to 5, further comprising:
a radio transmitter for transmitting electrical signals; and
a radio receiver for receiving electrical signals,
the radio transmitter and/or the radio receiver being connected to the communications interface.

7. The bag as claimed in one of claims 1 to 6, having an authentication unit for authenticating a user of the bag.

8. The bag as claimed in claim 7, in which the authentication unit is further comprising:
a speaker recognition unit, and/or
a fingerprint sensor.

9. The bag as claimed in claim 7 or 8, in which the authentication unit is contained in a lock of the bag.

10. The bag as claimed in one of claims 1 to 9, in which at least some of the electrical devices are configured as one of the following electrical devices provided with means of communication selected from the group consisting of:
a mobile telephone,
a GPS unit,
a data memory,
a hand-held computer,
a computer,
a games console,
a data display unit,
a microphone,
a loudspeaker,
a voice recognition unit; and/e?
a camera.

11. The bag as claimed in one of claims 1 to 10, having a keyboard which is integrated into the bag.

12. The bag as claimed in claim 11, in which the keyboard
is embodied as a touch-sensitive keyboard, and/or
has capacitive sensors as key elements of the keyboard.

13. The bag as claimed in one of claims 1 to 12, configured as one of the following types of bag:
a briefcase,
a school bag,
a rucksack,
a case, or
a handbag.

## Revendications

1. Sacoche comportant:
plusieurs interfaces de communication intégrées dans la sacoche,
un réseau de communication formé dans une paroi de la sacoche et avec lequel les interfaces de communication sont couplées entre elles, de sorte qu'à l'aide des interfaces de communication et du réseau de communication, une multiplicité d'appareils électriques contenus dans la sacoche peuvent être couplés électriquement entre eux, de sorte que des données peuvent être échangées entre les appareils électriques.

2. Sacoche selon la revendication 1, comportant une borne d'alimentation en énergie intégrée dans la sacoche et à laquelle peut être couplée une unité d'alimentation en énergie contenue dans la sacoche et servant à alimenter en énergie les appareils électriques contenus dans la sacoche.

3. Sacoche selon la revendication 1 ou 2, réalisé en un matériau textile.

4. Sacoche selon la revendication 3, dans laquelle le réseau de communication est cousu dans le matériau textile.

5. Sacoche selon l'une des revendications 1 à 4, dans laquelle le réseau de communication comporte des conducteurs électriques intégrés dans la sacoche et qui sont couplés à l'interface de communication pour un échange de données entre les appareils électriques.

6. Sacoche selon l'une des revendications 1 à 5 comportant
• un émetteur radio pour émettre des signaux électriques, et
• un récepteur radio pour recevoir des signaux électriques,
• l'émetteur radio et/ou le récepteur radio étant couplés à l'interface de communication.

7. Sacoche selon l'une des revendications 1 à 6, comportant une unité d'authentification servant à authentifier un utilisateur de la sacoche.

8. Sacoche selon la revendication 7, dans laquelle l'unité d'authentification comporte
• une unité d'identification d'un locuteur, et/ou
• un détecteur d'empreintes digitales.

9. Sacoche selon la revendication 7 ou 8, dans laquelle l'unité d'authentification est contenue dans une serrure de la sacoche.

10. Sacoche selon l'une des revendications 1 à 9, dans laquelle au moins une partie des appareils électriques est agencée sous la forme de l'un des appareils électriques suivants, équipés de moyens de communication:
• un radiotéléphone mobile,
• une unité GPS,
• une mémoire de données,
• un ordinateur portable,
• un ordinateur,
• une console de jeu,
• une unité d'affichage de données,
• un microphone,
• un haut-parleur,
• une unité d'identification de signaux vocaux et/ou
• un appareil de prise de vues.

11. Sacoche selon l'une des revendications 1 à 10, comportant un clavier intégré dans la sacoche.

12. Sacoche selon la revendication 11, dans laquelle le clavier
• est agencé sous la forme d'un clavier à membrane et/ou
• comporte des détecteurs capacitifs en tant qu'éléments de touches du clavier.

13. Sacoche selon l'une des revendications 1 à 12, agencée sous la forme de l'un des types de sacoche suivants:
• une sacoche porte-documents,
• un cartable,
• un sac à dos,
• une mallette, ou
• un sac à main.
